# EUROPÄISCHE PATENTSCHRIFT

(11) **EP 0 569 397 B1**
(45) Veröffentlichungstag und Bekanntmachung des Hinweises auf die Patenterteilung: **28.06.1995**
(21) Anmeldenummer: 92903027.8
(22) Anmeldetag: 28.01.1992
(51) Int. Cl.: G11B 19/247

(54) **VERFAHREN ZUR VERKÜRZUNG DER ZUGRIFFSZEIT**
PROCESS FOR REDUCING ACCESS TIME
PROCEDE DE REDUCTION DU TEMPS D'ACCES

(30) Priorität: 31.01.1991 DE 4102796
(43) Veröffentlichungstag der Anmeldung: 18.11.1993
(73) Patentinhaber: Deutsche Thomson-Brandt GmbH, 78003 Villingen-Schwenningen (DE)
(72) Erfinder: BAAS, Dieter, D-7640 Kehl-Auenheim (DE)
(86) Internationale Anmeldenummer: EP9200171
(87) Internationale Veröffentlichungsnummer: WO9214246

(56) Entgegenhaltungen:
- EP-A- 0 123 946
- EP-A- 0 178 657
- WO-A-86/05310
- DE-A- 3 933 974
- PATENT ABSTRACTS OF JAPAN vol. 010, no. 316 (P-510)28. Oktober 1986 & JP, A, 61 126 665 (HITACHI LTD) 14 June 1986

## Beschreibung

Die Erfindung betrifft ein Verfahren zur Verkürzung der Zugriffszeit bei einem Wiedergabegerät, das Daten mit konstanter Bahngeschwindigkeit berührunglos mittels einer Abtastvorrichtung von einer rotierenden Platte liest, die von einem ELektromotor angetrieben wird und deren Drehzahl mittels eines auf ihr aufgezeichneten Synchronsignals geregelt wird.

Es sind Wiedergabegeräte bekannt, die Daten berührungslos von einer Platte abtasten, die sich mit konstanter Winkelgeschwindigkeit dreht. Neben diesem System, das abgekürzt als CAV-System - die Abkürzung für constant angular velocity - bezeichnet wird, gibt es Wiedergabegeräte, die eine Platte mit konstanter Bahngeschwindigkeit abtasten. Diese Systeme, zu denen z.B. CDSpieler zählen, heißen daher Constant-Linear-Velocity-Systeme, abgekürzt CLV-System. Beim Abtasten der Platte von innen nach außen beginnend mit der innersten Datenspur bis zur äußersten Datenspur wird die Drehzahl der Platte von Datenspur zu Datenspur erhöht.

Die Regelung der Drehzahl der Platte erfolgt während der Datenwiedergabe mittels eines Synchronsignals, das auf der Platte aufgezeichnet ist. Bei einem CD-Spieler decodiert ein Decoder die nach der eight to fourteen modulation, abgekürzt EFM, aufgezeichneten Daten. Das Synchronsignal zur Regelung der Drehzahl der Platte, das der Decoder liefert, dient als Steuerspannung für einen Phasenregelkreis mit Nachlaufsynchronisation, der im weiteren Verlauf mit der üblichen Bezeichnung PLL abgekürzt wird.

Beim Spurspringen von einer Datenspur zur einer Zielspur wird der Regelkreis zur Regelung der Drehzahl der Platte geöffnet. Gleichzeitig wird die für die Zielspur erforderliche Drehzahl berechnet. Während nun der Lichtstrahl der optischen Abtastvorrichtung zur Zielspur springt, wird die Drehzahl der Platte mittels eines zweiten Regelkreises auf die zum Abtasten der Zielspur erforderliche Drehzahl geregelt.

Weil während des Spurspringes die augenblickliche Drehzahl nicht mehr mit Hilfe des auf der Platte aufgezeichneten Synchronsignals ermittelt werden kann, ist der zweite Regelkreis zur Ermittlung der Drehzahl mit einem Tachogenerator ausgerüstet. Wenn aer Lichtstrahl an der Zielspur ankommt, hat der zweite Regelkreis die Drehzahl der Platte bereits auf den für die Zielspur erforderlichen Wert geregelt. Der zweite Regelkreis wird wieder ausgeschaltet, während gleichzeitig die Regelschleife des ersten Regelkreises geschlossen wird, damit die Drehzahl der Platte wieder mittels des auf ihr aufgezeichneten Synchronsignals geregelt werden kann.

Durch die Maßnahme, während des Spurspringes von einer gerade abgetasteter Datenspur zu einer Zielspur, die Drehzahl der Platte mittels eines zweiten Regelkreises auf den der Zielspur zugeordneten Sollwert zu regeln, werden sehr kurze Zugriffszeiter erzielt, weil sich die Platte bereits mit der richtigen Drehzahl dreht, wenn der Lichtstrahl an der Zielspur angekommen ist.

Ein Gerät, welches nach dem oben beschriebenen Verfahren arbeitet ist aus EP-A-0 123946 bekannt.

Ein Nachteil liegt aber darin, daß ein zweiter Pegelkreis mit einem Tachogenerator nötig ist.

Aufgabe der Erfindung ist es daher, beim Spurspringen kurze Zugriffzeiten zu erzielen, ohne daß hierzu ein zweiter Regelkreis zur Regelung der Platte erforderlich ist.

Die Erfindung löst diese Aufgabe dadurch, daß vor Beginn der Datenwiedergabe die Abtastvorrichtung eine ausgewählte Datenspur abtastet, daß währenddessen der Elektromotor von einem pulsbreitenmodulierten Signal angesteuert wird, dessen Pulsbreitenverhältnis so lange verändert wird, bis die Platte, die der ausgewählten Datenspur zugeordnete Drehzahl erreicht hat, daß das für die ausgewählte Datenspur gefundene Pulsbreitenverhältnis gespeichert wird, daß beim Spurspringen von einer Datenspur zur einer Zielspur der Regelkreis zur Regelung der Drehzahl geöffnet wird, daß aus dem gespeicherten Pulsbreitenverhältnis das der Zielspur zugeordnete Pulsbreitenverhältnis berechnet wird, daß der Elektromotor von einem Signal mit dem berechneten Pulsbreitenverhältnis angesteuert wird und daß bei Erreichen der Zielspur der Regelkreis wieder geschlossen wird.

Am Beispiel eines CD-Spielers wird die Erfindung nun erläutert.

Weil der Elektromotor, der die Compact-Disc dreht, von einem pulsbreitenmodulierten Signal angesteuert wird, hängt die Drehzahl der Platte vom Pulsbreitenverhältnis ab.

Die Erfindung geht von der Erkenntnis aus, daß für jede Drehzahl ein bestimmtes Pulsbreitenverhältnis erforderlich ist, das sich berechnen läßt, wenn man das Pulsbreitenverhältnis für eine bekannte Datenspur kennt.

Nach dem Einlegen einer Platte wird daher zuerst eine bestimmte Datenspur, z.B. die Einlauf- oder die Auslaufspur abgetastet und mittels des auf der Platte aufgezeichneten Synchronsignals die Drehzahl der Platte auf den richtigen Wert geregelt. Das sich bei dieser Drehzahl einstellende Pulsbreitenverhältnis des Signals, mit dem der Elektromotor angesteuert wird, wird in einem Speicher gespeichert.

Beim Spurspringen von einer Datenspur zu einer Zielspur wird nun die Regelschleife des Regelkreises zur Regelung der Drehzahl der Platte geöffnet. Aus dem gespeicherten Pulsbreitenverhältnis wird das der Zielspur zugeordnete Pulsbreitenverhältnis berechnet. An den Elektromotor, der die Platte dreht, wird nun ein Steuersignal mit dem berechneten Pulsbreitenverhältnis gelegt, damit die Platte auf die für die Zielspur erforderliche Drehzahl gebracht wird. Wenn der Lichtstrahl bei der Zielspur angekommen ist, dreht sich die Platte daher wie beim Stand der Technik bereits mit der richtigen Drehzahl. Der Regelkreis kann jetzt wieder geschlossen werden, um mittels des auf der Platte aufgezeichneten Synchronsignals die Drehzahl zu regeln.

Die Zugriffzeit ist bei der Erfindung ebenso kurz wie beim Stand der Technik; jedoch benötigt die Erfindung keinerlei zusätzlichen Aufwand an Bauteilen, wie z.B. einen zweiten Regelkreis mit einem Tachogenerator.

Dadurch daß für jede Platte vor dem Abspielen individuell das Pulsbreitenverhältnis ermittelt wird, spielen unterschiedliche Plattengröße und unterschiedliche Trägheitsmomente der einzelnen Platten keinerlei Rolle.

Wie bereits erwähnt, kann für eine Compact-Disc z.B. das Pulsbreitenverhältnis für die Einlauf- oder für die Auslaufspur ermittelt werden. Es ist auch möglich, das Pulsbreitenverhältnis für mehrere bekannte Datenspuren, z.B. die Einlauf- und die Auslaufspur zu bestimmen und die ermittelten Werte zu speichern. Die gespeicherten Werte dienen als Grundlage zur Berechnung des für die Zielspur erforderlichen Pulsbreitenverhältnisses. Die Berechnung des jeweils nötigen Pulsbreitenverhältnisses kann in einem Mikroprozessor erfolgen, der in jeden CD-Spieler zu finden ist.

Die Erfindung ist für Aufzeichnungs- und/oder Wiedergabegeräte geeignet, die eine rotierende Platte berührungslos mit konstanter Bahngeschwindigkeit abtasten. Als Beispiele kommen CD-Spieler, Videoplattenspieler, DRAW-Disc-Spieler und magnetooptische Geräte in Frage.

## Patentansprüche

1. Verfahren zur Verkürzung der Zugriffszeit bei einem Wiedergabegerät, das Daten mit konstanter Bahngeschwindigkeit berührungslos mittels einer Abtastvorrichtung von einer rotierenden Platte liest, die von einem Elektromotor angetrieben wird und deren Drehzahl mittels eines auf der Platte aufgezeichneten Synchronsignals geregelt wird, **dadurch gekennzeichnet**, daß vor Beginn der Datenwiedergabe die Abtastvorrichtung eine ausgewählte Datenspur abtastet, daß währenddessen der Elektromotor von einem pulsbreitenmodulierten Signal angesteuert wird, dessen Pulsbreitenverhältnis so lange verändert wird, bis die Platte die der ausgewählten Datenspur zugeordnete Drehzahl erreicht hat, daß das für die ausgewählte Datenspur gefundene Pulsbreitenverhältnis gespeichert wird, daß beim Spurspringen von einer Datenspur zu einer beliebigen Zielspur der Regelkreis zur Regelung der Drehzahl geöffnet wird, daß aus dem gespeicherten Pulsbreitenverhältnis das der Zielspur zugeordnete Pulsbreitenverhältnis berechnet wird, daß der Elektromotor von einem Signal mit dem berechneten Pulsbreitenverhältnis angesteuert wird und daß bei Erreichen der Zielspur der Regelkreis wieder geschlossen wird.

2. Verfahren nach Anspruch 1, **dadurch gekenn****zeichnet**, daß bei einem CD-Spieler das Pulsbreitenverhältnis für die Einlaufspur der Platte bestimmt und gespeichert wird.

3. Verfahren nach Anspruch 1, **dadurch gekennzeichnet**, daß bei einem CD-Spieler das Pulsbreitenverhältnis für die Auslaufspur der Platte bestimmt und gespeichert wird.

4. Verfahren nach Anspruch 1, **dadurch gekenn****zeichnet**, daß für mehrere Datenspuren die Pulsbreitenverhältnisse bestimmt und gespeichert werden und daß aus den gespeicherten Pulsbreitenverhältnissen das zur Zielspur gehörende Pulsbreitenverhältnis berechnet wird.

5. Verfahren nach Anspruch 4, **dadurch gekenn****zeichnet**, daß bei einem CD-Spieler das Pulsbreitenverhältnis für die Einlauf- und das für die Auslaufspur der Platte bestimmt und gespeichert werden.

## Claims

1. Process for shortening the access time at a reproduction apparatus, which reads data without contact at constant linear tracking velocity by means of a scanning device from a rotating disk, which is driven by an electric motor and whose speed of rotation is controlled by a synchronization signal recorded on the disk, characterized in that the scanning device scans before start of the data reproduction a selected data track, that meanwhile the electric motor is controlled by a pulse-width-modulated signal, whose pulse-width-ratio is varied until the disk has reached the number of revolutions assigned to the selected data track, that the pulse-width-ratio calculated for the selected data track is stored, that when jumping from one data track to an aimed-at track the control circuit is opened to control the speed of rotation, that from the memorized pulse-width-ratio the pulse-width-ratio assigned to an aimed-at track is calculated. that the electric motor is controlled by a signal having the calculated pulse-width-ratio and that upon reaching the aimed-at track the control circuit is closed again.

2. Process according to claim 1, characterized in that for a CD-player the pulse-width-ratio for the start track of the disk is determined and stored.

3. Process according to claim 1, characterized in that for a CD-player the pulse-width--ratio for the end track is determined and stored.

4. Process according to claim 1, characterized in that for several data tracks the pulse-width-ratios are determined and stored and that from the stored pulse-width-ratios the pulse-width-ratio assigned to the aimed-at track is calculated.

5. Process according to claim 4, characterized in that for a CD-player the pulse-width-ratio of the start and of the end track of the disk is determined and stored.

## Revendications

1. Procédé pour la réduction du temps d'accès dans un équipement de reproduction qui lit des données à vitesse linéaire constante, sans contact, à partir d'un disque tournant, au moyen d'un dispositif de balayage, le disque étant entraîné par un moteur électrique et le nombre de tours du disque étant réglé par un signal de synchronisation mémorisé sur le disque, caractérise par le fait qu'avant le début de la reproduction des données, le dispositif de balayage explore une piste de données choisie, que pendant ce temps le moteur électrique est amorcé par un signal modulé en durée d'impulsions, dont le rapport de durée d'impulsion est modifié jusqu'au moment où le disque a atteint le nombre de tours affecté à la piste de données choisie, que le rapport de durée d'impulsions obtenu pour la piste de données choisie est mémorisé, que lors du passage d'une piste de donnée à une piste cible quelconque, le circuit régulateur est ouvert en vue du réglage du nombre de tours, que le rapport de durée d'impulsions affecté à la piste cible est calculé à partir du rapport de durée d'impulsions mémorisé, que le moteur électrique est amorcé par un signal au moyen du rapport de durée d'impulsions calculé et que le circuit régulateur est refermé lorsque la piste cible est atteinte.

2. Procédé selon la revendication 1, caractérisé par le fait que dans un lecteur de CD, le rapport de durée d'impulsions est déterminé et mémorise pour la piste de départ.

3. Procédé selon la revendication 1, caractérisé par le fait que dans un lecteur de CD, le rapport de durée d'impulsions est déterminé et mémorise pour la piste de sortie.

4. Procédé selon la revendication 1, caractérisé par le fait que les rapports de durée d'impulsions sont déterminés et mémorisés pour plusieurs pistes de données et que le rapport de durée d'impulsions affecté à la piste cible est calculé à partir des rapports de durée d'impulsions mémorisé.

5. Procédé selon la revendication 4, caractérisé par le fait que pour un lecteur de CD, le rapport de durée d'impulsions est déterminé et mémorisé individuellement pour la piste de départ et pour la piste de sortie du disque.
